# EUROPÄISCHE PATENTSCHRIFT

(11) **EP 1 469 724 B1**
(45) Veröffentlichungstag und Bekanntmachung des Hinweises auf die Patenterteilung: **28.12.2011**
(21) Anmeldenummer: 03702563.2
(22) Anmeldetag: 29.01.2003
(51) Int. Cl.: A01N 1/02

(54) **KRYOKONSERVIERUNG AN TEXTILEN GEWEBEN**
CRYOCONSERVATION ON WOVEN TEXTILES
CRYOCONSERVATION SUR DES TISSUS TEXTILES

(30) Priorität: 30.01.2002 DE 10203644
(43) Veröffentlichungstag der Anmeldung: 27.10.2004
(73) Patentinhaber: Fraunhofer-Gesellschaft zur Förderung der angewandten Forschung e.V., 80686 München (DE)
(72) Erfinder: ZIMMERMANN, Heiko, 66113 Saarbrücken (DE); MEYER, Jörg-Uwe, 23909 Ratzeburg (DE); FUHR, Günter, R., 13187 Berlin (DE)
(74) Vertreter: Hertz, Oliver
(86) Internationale Anmeldenummer: PCT/EP2003/000904
(87) Internationale Veröffentlichungsnummer: WO 2003/063590

(56) Entgegenhaltungen:
- WO-A-02/31107
- WO-A-97/18842
- WO-A-98/17791
- WO-A-02/092054

## Beschreibung

Die Erfindung betrifft Vorrichtungen zur Kryospeicherung von biologischen Proben, insbesondere Kryosubstrate für biologische Proben, und Verfahren zur Kryokonservierung von biologischen Proben unter Verwendung derartiger Vorrichtungen.

Es ist allgemein bekannt, biologische Proben zur Lagerung (Speicherung) und/oder zur Bearbeitung in einen gefrorenen Zustand zu überführen (Kryokonservierung). Für makroskopische Proben, wie z. B. Blut oder Gewebe, sind zahlreiche Techniken zur Probenlagerung bei tiefen Temperaturen entwickelt worden. In der modernen Medizin, Gentechnik und Biologie besteht die Tendenz, zunehmend kleine Proben einer Kryokonservierung zu unterziehen. Es werden bspw. kleine Suspensionsvolumina (ml oder darunter) mit suspendierten Zellen oder Zellgruppen eingefroren.

Die Kryokonservierung von Zellen aus in vitro-Kulturen erfolgt in überwiegendem Maße in Suspension. Die meisten der biomedizinisch relevanten Zellen benötigen jedoch zu ihrer Vermehrung und geordneten Entwicklung einen Substratkontakt. Daher werden Proben ggf. nach einer Kultivierung im substratgebundenen Zustand eingefroren. Eine wesentliche Anforderung besteht darin, dass die Proben nach der Kryokonservierung in einem an sich unveränderten Zustand verfügbar sein sollen. Bisher sind in der Kryokonservierung nur wenige Kryosubstrate bekannt, die für die Tieftemperaturbehandlung von Zellen geeignet sind. Zumeist handelt es sich um planare, den in vitro- Kulturoberflächen ähnliche Systeme. Beispielsweise aus EP 804 073 ist die geordnete Ablage von Suspensionstropfen auf planaren Kryosubstraten bekannt. Planare Kryosubstrate besitzen zwar Vorteile in Bezug auf die Handhabung und Identifizierung der Kryoproben. Sie erfordern jedoch relativ viel Platz. Außerdem erfordert die Übertragung von Proben auf herkömmliche Kryosubstrate häufig einen starken Eingriff in die Umgebungsbedingungen, z. B. bei der Übertragung von einer Suspension auf ein Kryosubstrat. Dies kann für die Eigenschaften der Proben nachteilig sein.

Aus DE 37 51 519 T2 ist bekannt, Stromazellen in vitro auf einem zweidimensionalen Maschenwerk zunächst zu kultivieren und anschließend das mit Zellen bewachsene Maschenwerk zu einem dreidimensionalen Kulturträger für die Kultivierung weiterer Zellentypen, wie zum Beispiel Leberzellen zu formen. Die Formung des Kulturträgers erfolgt durch ein Anhaften und Umschließen des Maschenwerks durch die Stromazellen. In DE 37 51 519 T2 wird auch beschrieben, den Kulturträger für die Kultivierung der anderen Zellentypen im gefrorenen Zustand vorzuhalten. Das in DE 37 51 519 T2 beschriebene Maschenwerk ist als Träger für die Kryokonservierung von biologischen Materialien nur beschränkt geeignet, da der Kulturträger eine hohe Maschendichte mit geringen Maschengrößen aufweist und als fester Verbund aus Maschenwerk und Zellen eine neue funktionale Einheit für die folgende Zellkultivierung bildet. Die geringen Maschengrößen bewirken eine geringe mechanische Flexibilität des Kulturträgers. Die auf dem Maschenwerk verwachsenen und verschränkten Zellen lassen sich nicht mehr zerstörungsfrei ablösen. Des weiteren zeigte sich, dass sich Zellen beim Einfriervorgang vom Maschenwerk ablösten.

In US 3 997 396 wird die Kultivierung von Zellen auf Hohlfasern, die nach Art einer in vitro-Kulturoberfläche in einem Reaktor angeordnet sind, bei Raumtemperatur beschrieben. Zur Förderung der Kultivierung werden die Hohlfasern mit Sauerstoff durchströmt. Die Hohlfasern sind unter praktischen Gesichtspunkten als Träger für die Kryokonservierung von biologischen Materialien ungeeignet.

Aus WO 98/17791 und WO 97/18842 sind Verfahren zur Kultivierung biologischer Zellen in dreidimensionalen Matrixmaterialien bekannt. Die Matrixmaterialien umfassen Filz- oder Vliesstoffe aus biokompatiblen Fasern.

Der vorliegenden Erfindung liegt die Aufgabe zugrunde, verbesserte Kryosubstrate, insbesondere zur Kryokonservierung biologischer Proben bereitzustellen, mit denen Nachteile herkömmlicher Kryosubstrate überwunden werden. Die Kryosubstrate sollen insbesondere eine gute Platzausnutzung bei einer Kryospeicherung, eine physiologische, d. h. an die Zellsysteme angepasste Übernahme von Proben aus Suspensionen und/oder eine gute Handhabung der Proben ermöglichen.

Diese Aufgaben werden mit einem Kryosubstrat und Verfahren mit den Merkmalen gemäß Patentanspruch 1 gelöst. Vorteilhafte Ausführungsformen der Erfindung ergeben sich aus den abhängigen Ansprüchen.

Ein erster allgemeiner Aspekt der Erfindung besteht in der Bereitstellung eines Kryosubstrats, insbesondere zur Kryokonservierung biologischer Proben, das mit mindestens einem Festphasenelement für eine adhärente Probenfixierung ausgestattet ist, wobei das Festphasenelement im Unterschied zu herkömmlichen flächigen Kryosubstraten durch eine Vielzahl von Trägerfilamenten gebildet wird, die ein Gewebe mit mehreren Gewebebereichen bilden, in denen die Trägerfilamente jeweils verschiedene Trägerfilamentdichten (Zahl der Filamente pro Fläche oder Volumen) und/oder verschiedene Oberflächenbeschichtungen aufweisen. Mit dieser Ausführungsform der Erfindung sind insbesondere die Vorteile einer größeren Flexibilität der Anwendung des Kryosubstrates verbunden.

Gemäß der Erfindung wird ein Kryosubstrat mit mindestens einem Festphasenelemert bereitgestellt, as durch ein einzelnes Trägerfilament oder einen einzelnen Trägerfilament-Strang aus mehreren Trägerfilamenten gebildet wird. Mit diesem Merkmal der Erfindung sind insbesondere die Vorteile einer vereinfachten, schonenden und z. B. für Zellen stressfreien Beladung des Kryosubstrates und eines schnellen Einfriervorganges verbunden.

Es wird auch ein Kryosubstrat beschrieben, das mindestens ein Festphasenelement aus einer Vielzahl von Trägerfilamenten aufweist, die ein Gewebe oder einen Trägerfilament-Strang mit einer Trägerfilamentdichte derart bilden, dass ein mittlerer Abstand (zum Beispiel Maschenabstand) zwischen den Trägerfilamenten größer oder gleich der Dicke der Trägerfilamente ist. Der Abstand zwischen den Trägerfilamenten ist vorzugsweise so gewählt, dass eine Durchlässigkeit für biologische Zellen gegeben ist, und liegt beispielsweise im Bereich vom 100 µm bis 5 mm, insbesondere 400 µm bis 2 mm. Dieses Kryosubstrat kann insbesondere Vorteile in Bezug auf die Beladung des Festphasenelements und die mechanische Flexibilität des Kryosubstrats besitzen. Die mechanische Flexibilität ist vor allem beim Einfriervorgang und dem Umgang mit den beladenen Kryosubstraten von Bedeutung.

Die oben genannten Merkmale der Erfindung können erfindungsgemäß einzeln oder in Kombinationen vorgesehen sein. Durch die genannten Maßnahmen kann vorteilhafterweise ein Kryosubstrat mit einer erheblich erweiterten Funktionalität geschaffen werden. Das Kryosubstrat bildet sowohl einen Träger für biologische Materialien als auch ein Mittel zur Unterstützung des Einfriervorganges.

Das mindestens eine Trägerfilament ist ein langgestrecktes, stab-, faden- oder drahtförmiges, biegsames Gebilde. Die erfindungsgemäßen Festphasenelemente besitzen eine Reihe von Vorteilen in Bezug auf die Beladung mit Proben, die Kryokonservierung (Kühlung unter den Gefrierpunkt von Wasser, Lagerung und/oder Bearbeitung) und die Handhabung kryokonservierter Proben. Ein Kryosubstrat ist allgemein ein Träger für Proben, die einem Einfriervorgang unterzogen werden und an dem die Proben adhärent fixiert sind oder der die Proben umschließt. Biologische Proben, wie z. B. Zellen, Zellgruppen, biologische Gewebe oder biologische Gewebestücke können adhärent an einem oder mehreren Trägerfilamenten fixiert werden. Hierzu kann vorteilhafterweise das Festphasenelement in mindestens eine Suspension mit den zu fixierenden Proben getaucht werden. Trägerfilamente sind flexibel. Entsprechend können sie je nach den Konservierungsbedingungen zu einem Bündel oder Geflecht geformt und platzsparend angeordnet werden. Vorteilhaft ist auch, dass Trägerfilamente mit einfachen Werkzeugen, z. B. Schneideinrichtungen, durchtrennt werden können, so dass die Probenentnahme im tiefgekühlten oder aufgetauten Zustand erleichtert wird.

Gemäß der ersten bevorzugten Ausführungsform der Erfindung umfasst das Festphasenelement eine Vielzahl von Trägerfilamenten, die zumindest teilweise ein Gewebe bilden. Unter Gewebe wird hier allgemein ein aus vielen, sich kreuzenden Trägerfilamenten hergestellter Verbund verstanden, der einen geflochtenen Strang oder Faden oder ein mehrdimensionales Geflecht, Gestiche, Gehäkel oder Gestricke umfasst. Die Ausbildung des Festphasenelements als Gewebe besitzt den Vorteil einer Stabilitätserhöhung, ohne dass die Flexibilität bei der Beladung oder die Vorteile bei der Kryokonservierung aufgegeben werden. Außerdem besitzt ein Gewebe einen erweiterten Anwendungsbereich in Bezug auf eine Kultivierbarkeit der Probe auf dem Kryosubstrat und die Modifizierung der Funktionalität des Kryosubstrats, z. B. durch Filamentbeschichtung, Kompositbildung oder Integration zusätzlicher Einrichtungen. Insbesondere zwei- oder dreidimensionale Gewebestrukturen besitzen Vorteile in Bezug auf die Handhabbarkeit und Identifizierbarkeit, wie sie auch bei herkömmlichen planaren Kryosubstraten gegeben sind.

Ein erfindungsgemäßes Kryosubstrat kann sich insbesondere durch ein gewebeförmiges Festphasenelement auszeichnen, in dem die verschiedenen Gewebebereiche über einzelne, voneinander beabstandete Trägerfilamente miteinander verbunden sind. Voneinander beabstandete Trägerfilamente bilden Brücken zwischen Gewebebereichen oder Gewebeabschnitten. Die Abstände zwischen den Trägerfilamenten sind vorzugsweise größer als biologische Einzelzellen, zum Beispiel rd. 100 µm bis 2 mm, so dass auch im beladenen Zustand Durchbrüche oder Löcher im Kryosubstrat gebildet sind. Durch diese Maßnahmen kann vorteilhafterweise die Funktionalität des Kryosubstrats weiter verbessert werden. Wenn das Gewebe aus erfindungsgemäß verwendeten Trägerfilamenten Durchbrüche oder Löcher aufweist, so können an deren Rändern Proben fixiert sein. Damit wird der Vorteil einer Probenfixierung auf minimaler Kontaktfläche noch verstärkt. Das Festphasenelement kann ferner so gebildet sein, dass bei der Kryokonservierung zwischen den Gewebebereichen und/oder den Durchbrüchen frei suspendierte Proben angeordnet werden.

Eine vorteilhafte Gestaltung des erfindungsgemäßen Kryosubstrats zeichnet sich durch die Ausbildung des Festphasenelements als langgestrecktes, z. B. zylinderförmiges Gewebe aus. Das Gewebe bildet makroskopisch ein eindimensionales Gebilde wie ein Faden und kann damit mit hoher Flexibilität beladen und konserviert werden.

Alternativ kann das Gewebe flächig oder dreidimensional gebildet sein. Diese Gestaltung besitzt den besonderen Vorteil einer hohen Aufnahmekapazität für biologische Proben im adhärenten oder suspendierten Zustand.

Erfindungsgemäß verwendete Trägerfilamente bestehen allgemein aus langgestreckten Aggregaten organischen, anorganischen oder gemischten Ursprungs, z. B. aus textilen Garnen, metallischen Drähten oder dgl. Trägerfilamente können gemäß einer vorteilhaften Gestaltung der Erfindung zumindest in Teilbereichen beschichtet sein, um die adhärente Probenfixierung zu fördern oder zu unterbinden. Dies besitzt den Vorteil einer Lokalisierung von Proben in bestimmten Bereichen des Kryosubstrats.

Ein besonderer Vorteil erfindungsgemäß verwendeten Gewebes besteht in der Integrierbarkeit weiterer Funktionselemente in das Kryosubstrat. Beispielsweise können in die Festphase metallische Drähte als Elektroden oder optische Elemente eingewebt sein. Weitere Beispiele sind unten beschrieben.

Ein Gegenstand der Erfindung sind ferner Verfahren zur Kryokonservierung von biologischen Proben unter Verwendung erfindungsgemäßer Kryosubstrate. Ein erfindungsgemäßes Verfahren zeichnet sich insbesondere durch eine Probenbeladung von mindestens einem Trägerfilament aus. Gemäß einer bevorzugten Ausführungsform der Erfindung werden Proben an einem oder mehreren, z. B. gewebeförmigen Trägerfilamenten adhärent fixiert.

Die Erfindung liefert ferner die folgenden vorteilhaften Eigenschaften:
- flächig strukturierter oder 3-dimensional strukturierter durchlässiger Substrataufbau,
- breites Materialspektrum mit einstellbaren Eigenschaften (z.B. die Zelladhäsion befördernd, behindernd, etc.),
- reproduzierbare Herstellung bei niedrigen Kosten,
- Sterilisierbarkeit und einfache labortechnische Handhabung,
- leichte, zellstressarme Waschprozesse, insbesondere zum Einbringen und Entfernen von Kryoprotektiva,
- lagestabile, selektive Entnehmbarkeit von Zell-Gewebeteilen in gefrorenem Zustand,
- leichte Erreichbarkeit der Zellen in tiefgefrorenem Zustand,
- Automatisierbarkeit der Verfahren, z.B. arbeiten mit Endlosmaterialien,
- Realisierbarkeit der Kryosubstrate als 1-dimensionale (z. B. Filament, Strang oder Faden), als 2-dimensionale (Gewebe, Gestiche, Gehäkel oder Gestricke) oder als 3dimensionale Gebilde (Komposit oder Netzwerke), und
- hohe Bioverträglichkeit / Biokompatibilität.

Besondere Vorteile bei der Kryokonservierung bestehen in:
- leichte Fraktionierbarkeit (auch im tiefgefrorenen Zustand),
- Möglichkeit des Hinzufügens von Proben durch Verweben von Filamenten im beladenen Zustand,
- Verbindung von Trägern, z. B. durch "Vernähen",
- Kombination verschiedener Materialien (auch alternierend),
- Verbindung mit neuen Materialien/Kombinationen (insbesondere möglich, weil bei lockerem Gewebe unterschiedliche Ausdehnungskoeffizienten toleriert werden),
- Mehrfachnutzung des Gewebes (auch als Flüssigkeitsspeicher zur Versorgung von Zellen), und
- ggf. vorgesehene Kühlfunktion des Gewebes als Stickstoffspeicher (z. B. beim Transport von Kryosubstraten).

Weitere Einzelheiten und Vorteile der Erfindung werden aus der folgenden Beschreibung der beigefügten Zeichnungen ersichtlich. Es zeigen:
- Figuren 1 bis 4:: Verschiedene Ausführungsformen erfindungsgemäßer Kryosubstrate,
- Figuren 5 bis 10:: Illustrationen von weiteren Kryosubstraten (keine Ausführungsformen der Erfindung), und
- Figur 11:: Illustration zur Beladung erfindungsgemäßer Kryosubstrate.

Ausführungsformen erfindungsgemäßer Kryosubstrate werden im folgenden insbesondere unter Bezug auf die Gestaltung von Festphasenelementen aus mindestens einem Trägerfilament beschrieben. Die in den Figuren gezeigten Festphasenelemente können jeweils in Kombination mit festen Substratteilen benutzt werden, wie unten beschrieben wird. Erfindungsgemäße Kryosubstrate sind zur Kryokonservierung, ggf. kombiniert mit einer Kultivierung vorgesehen.

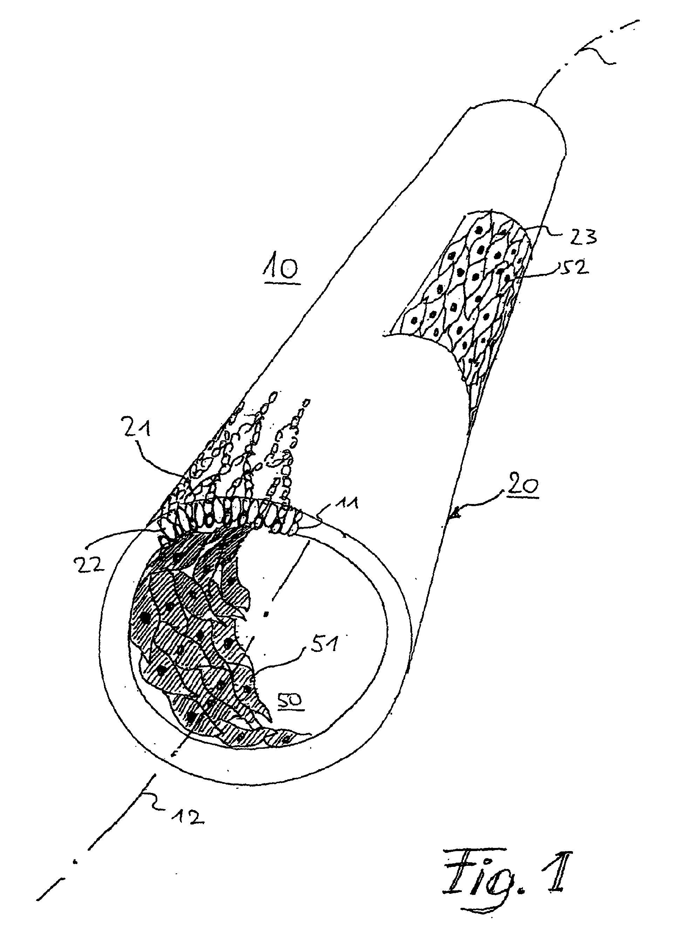

Gemäß Figur 1 besteht ein Festphasenelement 10 aus einer Vielzahl von Trägerfilamenten 11, die zu einem Gewebe 20 (Trägerfilament-Strang) verknüpft sind. Beispielhaft ist ein gestricktes, gehäkeltes, gewebtes oder anderweitig verknüpftes Gewebe 20 in Form eines langen Fadens oder zylinderförmigen Hohlkörpers (Gewebeschlauchs) dargestellt. Allgemein besitzt das Gewebe erfindungsgemäß je nach Anwendungsfall eine homogene oder in einzelne Gewebebereiche unterteilte Struktur. Eine mögliche Strukturform des zugrunde liegenden Spinnfadens (Trägerfilament 11) ist auf der Gewebeoberfläche 21 und im Schnitt auf dem vorderen Querschnitt 22 illustriert. Biologische Proben 50, z. B. Zellen 51 oder Zellgruppen oder biologisches Gewebe, sind im Innern des Gewebes 20 oder auf dessen Oberfläche angeordnet. Das Bezugszeichen 12 verweist auf die vorteilhafte Verlängerbarkeit des Festphasenelements 10.

Das Gewebe 20 kann lokal in seinen Oberflächeneigenschaften so beschichtet oder so verändert werden (z. B. durch molekulare Auflagen oder Plasmabehandlung), dass die Adhäsion von Zellen befördert oder behindert (bis vermieden) wird. Beispielsweise ist ein Gewebebereich 23 mit oberflächenbehandelten Trägerfilamenten so gebildet, dass die adhärente Fixierung von Proben (z. B. Zellen 53) gefördert wird.

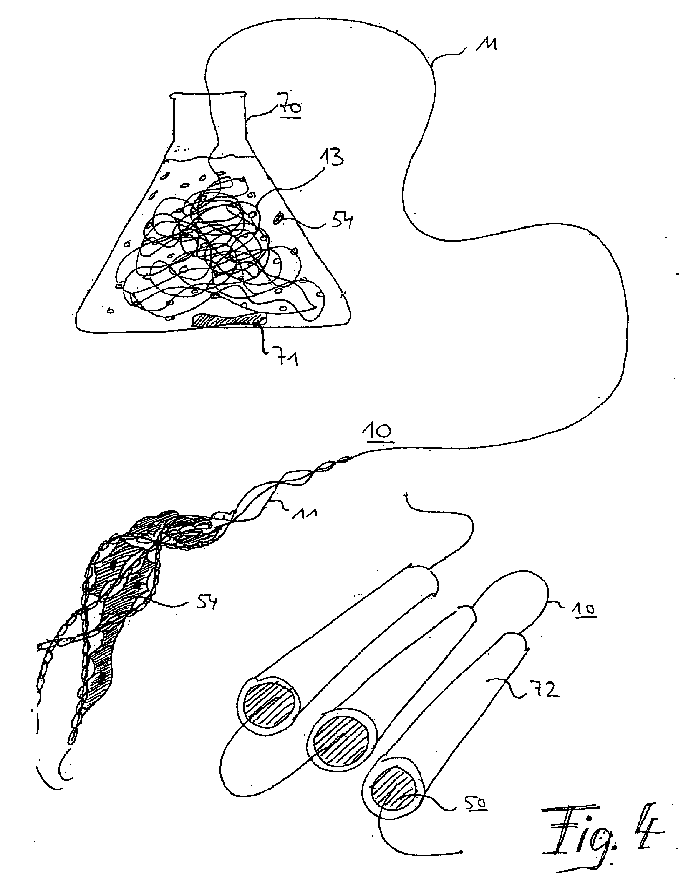

Ein besonderer Vorteil der Oberflächenmodifizierung ergibt sich bei der Beladung erfindungsgemäßer Kryosubstrate. Bringt man das System vollständig oder teilweise in eine der an sich bekannten Kulturlösungen (siehe Figur 4) für tierische oder pflanzliche Zellen, so wachsen Zellen auf den geeigneten Stellen an und vermehren sich nur dort.

Der fadenförmige Gewebeverbund besteht beispielsweise aus textilem Garn (Dicke im Bereich von z. B. 20 nm bis 5 mm). Alternativ können ein biokompatibles und kälteresistentes Kunststoffmaterial (Fasern), ein Kompositmaterial oder sogenannte Nanofasern oder Faser, die aus sogenannten Nanotubes auf Kohlenstoffbasis zusammengesetzt sind, verwendet werden. Gemäß einer vorteilhaften Gestaltung der Erfindung können im Gewebe bei dieser und den anderen Ausführungsformen zusätzliche Funktionselemente integriert sein. Beispielsweise können in das Gewebe 20 metallische Filamente eingewebt, eingeknüpft oder anderweitig integriert (z. B. angeheftet oder angeklebt) sein. Die metallischen Filamente können beispielsweise die Funktionen von Messelektroden, lokal wirkenden Heizelementen, Stimulatoren, Aktuatoren oder Sensoren besitzen. Als Sensoren werden beispielsweise Pt 100-Temperatur-Sensoren in das Gewebe 20 integriert. Die Elektroden und/oder Stimulatoren können zur Vitalitätsüberprüfung, zur Steuerung von Wirkstofffreisetzungen oder zur Identifikation dienen. Des weiteren können metallische Filamente auch zur Bildung von Solltrennstellen im Gewebe vorgesehen sein. Weiterhin ist es möglich, optische Wellenleiter wie z. B. Glasfasern, und optische Elemente in das Gewebe, insbesondere für Analyse- oder Ansteuerzwecke, zu integrieren.

Ein weiterer Vorteil der erfindungsgemäßen Verwendung von Trägerfilamenten besteht in deren Verknüpfbarkeit nach bekannten Methoden aus der Textiltechnik. Trägerfilamente können, ggf. mit den Funktionselementen, mit an sich verfügbaren Maschinen hergestellt werden.

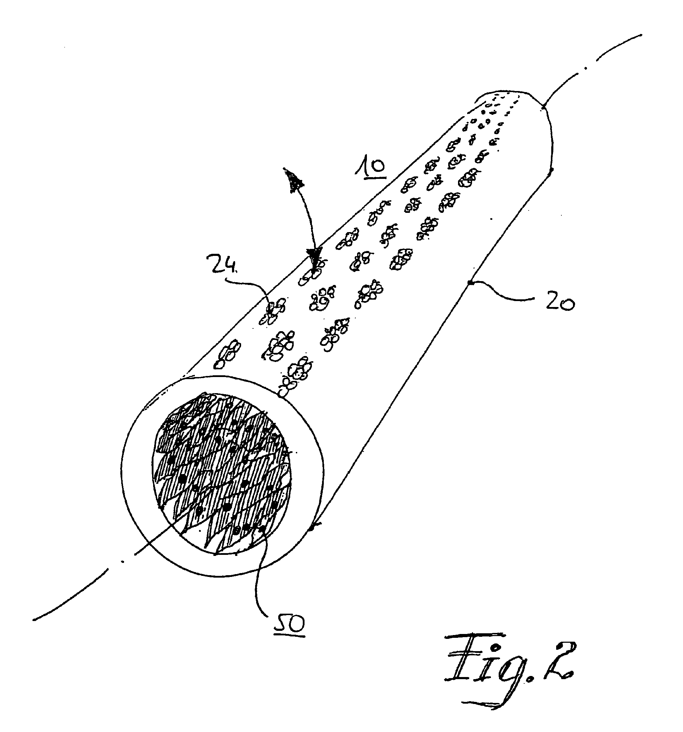

In Figur 2 ist ein weiteres zylinderförmiges Gewebe 20 gezeigt, in dessen Inneren sich Zellen 53 befinden (adhärent oder in einer Lösung suspendiert). Das Gewebe ist in unterschiedlicher Weise dicht gewebt und/oder oberflächenbehandelt. Es gibt Gewebebereiche 24 mit hoher Durchlässigkeit (siehe Pfeil), z. B. für Zellen zum Ein- und Auswandern oder auch nur für eine Nährlösung. Alternativ oder zusätzlich können in den Gewebebereichen 24 Modifizierungen der Filamente vorgesehen sein, die z. B. für Zellen ein adhärentes Anhaften fördern oder behindern. Die Modifizierungen umfassen zum Beispiel Beschichtungen aus Fibronektin, Kollagen, Poly-L-Lysin. Dieser heterogene Aufbau des Festphasenelements ist für die Besiedelung, das Auswaschen von Lösungen und das Herausführen der Zellen vor und nach dem Einfrieren von Vorteil.

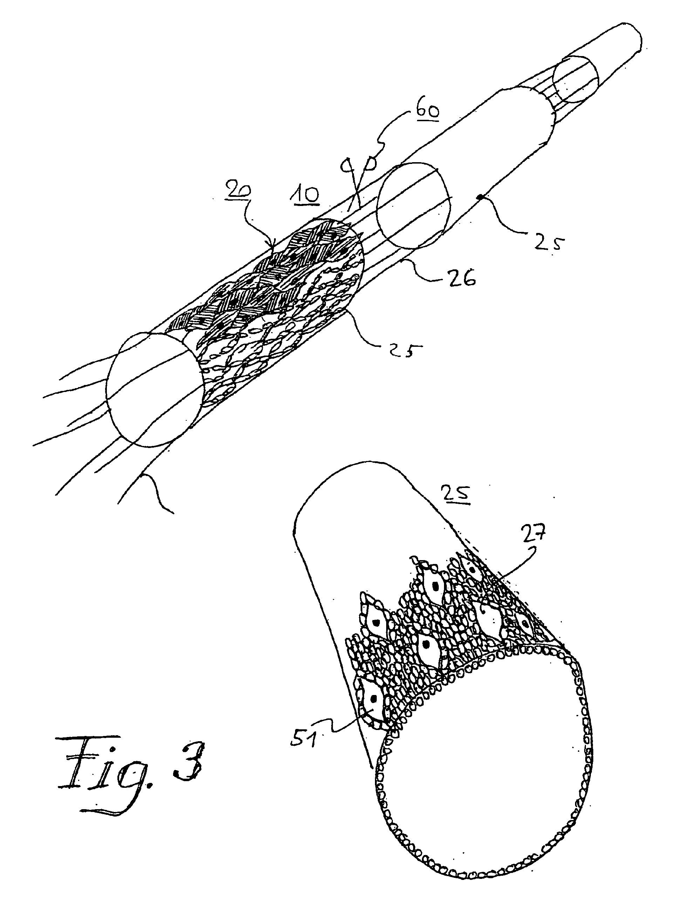

In Figur 3 ist ein Festphasenelement 10 in Form eines Gewebefadens 20 mit jeweils abwechselnd dichteren und weniger dichten Gewebebereichen 25, 26 gezeigt, die bei Bedarf getrennt werden können. Die weniger dicht gewebten Bereiche 26 bestehen beispielsweise aus einzelnen Trägerfilamenten oder Gewebe mit einer geringeren Filamentdichte. Die Bereiche 26 bilden Solltrennstellen, die beispielsweise mit einer Trenneinrichtung 60 (z. B. Schere) getrennt werden können. Es ist auch ein Zerrei-βen oder ein Aufbrechen an den Solltrennstellen möglich, um einzelne Gewebebereiche vom Festphasenelement 10 und vom Kryosubstrat zu entfernen. Ein solcher abgetrennter Abschnitt 25 ist in Figur 3 unten gezeigt.

Der Abschnitt 25 ist in einer heterogenen Art gewebt und behandelt, so dass das Gewebe offene Stellen oder "Löcher" 27 im Gewebe enthält. Diese Löcher 27 sind vorzugsweise gerade so bemessen sind, dass sich jeweils eine oder mehrere Zellen 51 hineinpassen und ansiedeln können. Auf diese Weise lassen sich heterogene Zellverbände erzeugen und kryokonservieren. Erfindungsgemäße Kryosubstrate bilden damit vorteilhafterweise eine Voraussetzung für ein effektives Bearbeiten oder Gestalten von biologischem Gewebe (sogenanntes "Tissue Engineering").

Figur 4 illustriert ein Verfahren zur Beladung erfindungsgemä-βer Kryosubstrate mit biologischen Proben. Die biologische Probe liegt in einer Flüssigkeit in einem Kulturgefäß 70 vor. Im Kulturgefäß 70 kann eine Rühreinrichtung 71 angeordnet sein, mit der in der Probenflüssigkeit (ggf. mit einer Nährstofflösung) eine Bewegung erzeugt wird. Das Kryosubstrat umfasst als Festphasenelement im dargestellten Beispiel einen gewebten, gestrickten oder anderweitig strukturierten Faden (hier bestehend aus Einzelhäkelfäden oder einzelnen Trägerfilamenten 11). Das Festphasenelement 10 wird zur Suspensionskultur mit adhärent wachsenden Zellen in das Gefäß 70 eingeführt. Das Festphasenelement 10 bildet im Kulturgefäß 70 beispielsweise ein Knäuel 13. Die Zellen 44 werden das Knäuel 13 besiedeln, darauf anwachsen und sich vermehren. Zur Kryokonservierung oder weiteren Verwendung wird der besiedelte Faden periodisch stückweise oder kontinuierlich (ggf. über weitere Lösungen) herausgezogen und in Suspension oder mit Flüssigkeitsüberdeckung eingefroren. Das Einfrieren erfolgt mit Kühlmedien, die von herkömmlichen Verfahren der Kryokonservierung bekannt sind, z. B. im Dampf von flüssigem Stickstoff.

Alternativ zur Substratbeladung im Kulturgefäß 70 kann erfindungsgemäß zum Aufbringen von Proben 50 auf das Festphasenelement 10 ein Durchführen durch röhren- oder schlauchförmige Kultivierungseinrichtungen 72 mit geschlossener Wandung vorgesehen sein, so dass das Festphasenelement 10 zusätzlich geschützt und von einer Lösung umgeben ist. Erfindungsgemäß kann eine Kultivierungseinrichtung 72 als festes Substratteil verwendet werden. Eine Kultivierung und/oder Kryokonservierung der Probe kann bei Erhaltung des Verbundes aus dem Festphasenelement 10 und den Kultivierungseinrichtungen 72 vorgesehen sein.

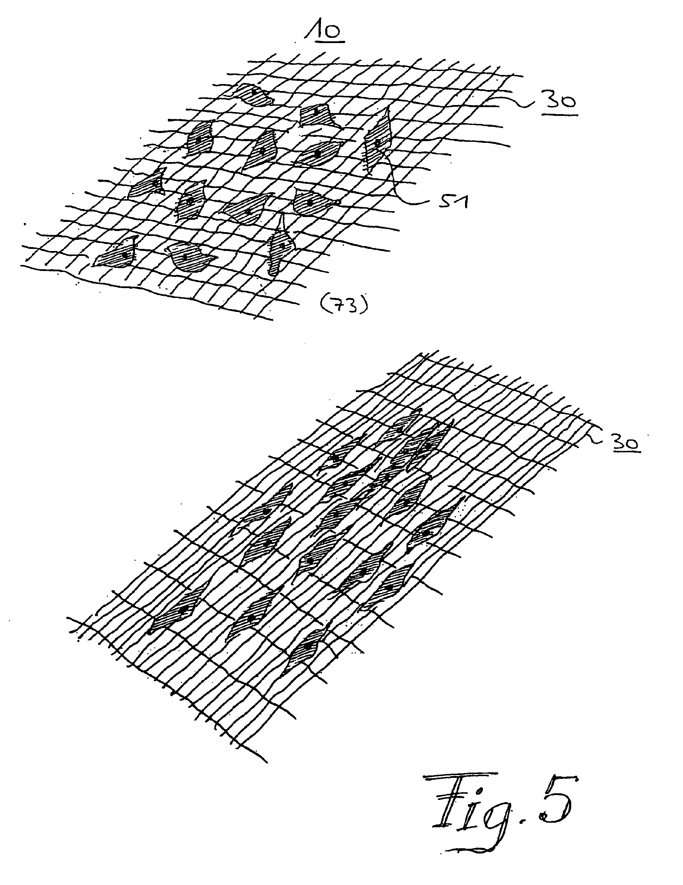

In Figur 5 ist beispielhaft die Besiedlung eines planaren Gewebebereiches 30 eines erfindungsgemäßen Kryosubstrates mit Zellen 51 gezeigt. Die Trägerfilamentdichte derart gering, dass der Maschenabstand zwischen den Trägerfilamenten größer als die Dicke der Trägerfilamente ist. Der Gewebebereich 30 befindet sich in einer Nährlösung 73 (nicht gezeigt). Die Zellen wachsen zunächst in unregelmäßiger statistischer Ausrichtung an. Gemäß einer vorteilhaften Ausführungsform der Erfindung kann während der adhärenten Probenfixierung eine Deformation des Festphasenelements 10 (hier: des Gewebes 30) vorgesehen sein. Durch eine langsame oder rasche Deformation (z. B. Zugkraft parallel zur Ausrichtung der Gewebefäden) erhalten die Zellen eine Vorzugsrichtung und werden ausgerichtet weiter kultiviert oder eingefroren. Dies ist schematisch im unteren Teil von Figur 5 illustriert. Die Deformation des Festphasenelements 10 ist auch für die 3-dimensionale und planare Besiedlung von Kryosubstraten für Implantationsanwendungen von Bedeutung. Es ergeben sich weitere Vorteile für ggf. folgende Schritte bei einem "Tissue Engineering" biologischen Gewebes. Es können mehrere Festphasenelemente, die jeweils aus Trägerfilament-Geweben bestehen zu einem Gewebekomposit verbunden werden. Die Verbindung erfolgt vorzugsweise durch angepasste Verbindungsmethoden, wie z. B. von Vernähen oder Verknüpfen.

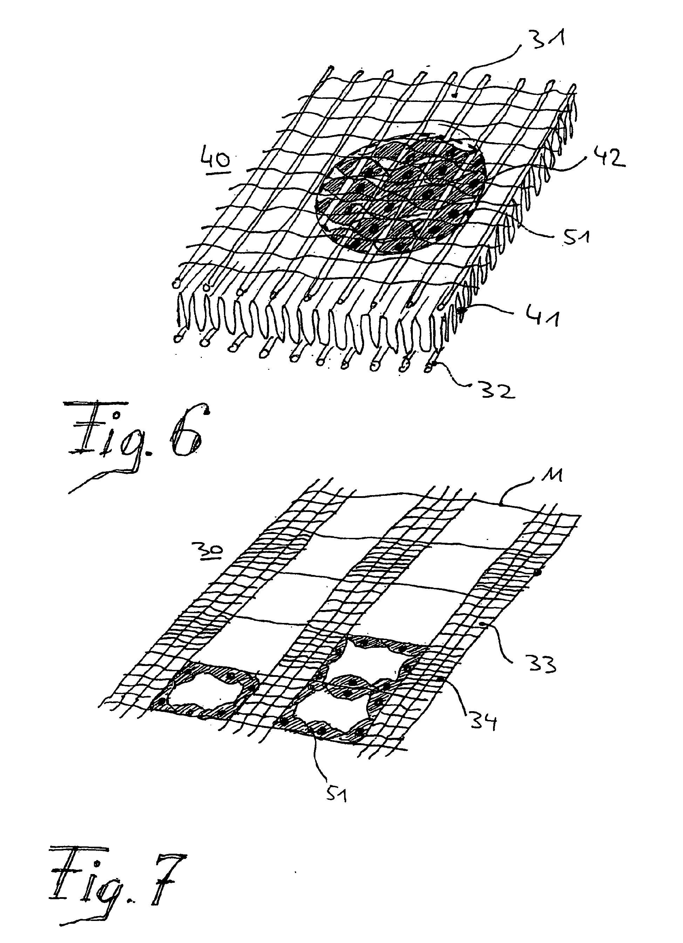

In Figur 6 ist beispielsweise ein dreidimensionales Gewebekomposit 40 gezeigt, dass aus zwei Gewebebereichen (Gewebeflächen) 31, 32 besteht, die über einen Spacer oder ein Spacergewebe 41 auf Abstand (z. B. 2 ... 100 µm) gehalten werden (keine Ausführungsform der Erfindung). Der Spacer 41 ist mit Durchbrüchen 42 versehen, so dass sich im Gewebekomposit 40 Hohlräume ergeben, in die die Zellen 51 an der Suspension einwandern können. In den Hohlräumen werden die Zellen fixiert, eingefroren und aufgetaut. Vorteile dieses Gewebekomposits 40 bestehen in einem guten Substratkontakt, der Schaffung von diskreten Zellarealen und einem erleichterten Lösungswechsel.

In Figur 7 ist ein planares Websubstrat 30 gezeigt, das aus verschieden dicht gewebten oder gestrickten Gewebebereichen 33, 34 besteh (keine Ausführungsform der Erfindung). Die Gewebebereiche 33, 34 sind miteinander oder über einzelne Verbindungsfäden oder Trägerfilamente 11 verbunden. Die Filamente des Gewebes 30 können so oberflächenbehandelt sein, dass eine Probenfixierung für Zellen nur an den Trägerfilamenten 11 gefördert, an den Gewebebereichen 33, 34 jedoch behindert werden. Damit siedeln sich Zellen 51 bevorzugt an den Trägerfilamenten 11 an. Alternativ können umgekehrte Bedingungen gewählt werden, bei denen eine bevorzugte Fixierung in den Gewebebereichen 33, 34 erfolgt. Das in Figur 7 illustrierte Kryosubstrat besitzt die besonderen Vorteile eines selektiven Herauslösens von Proben und einer raschen Entfernbarkeit einzelner Zellstränge. Diese können beschaffen sein, wie zuvor bereits beschrieben wurde.

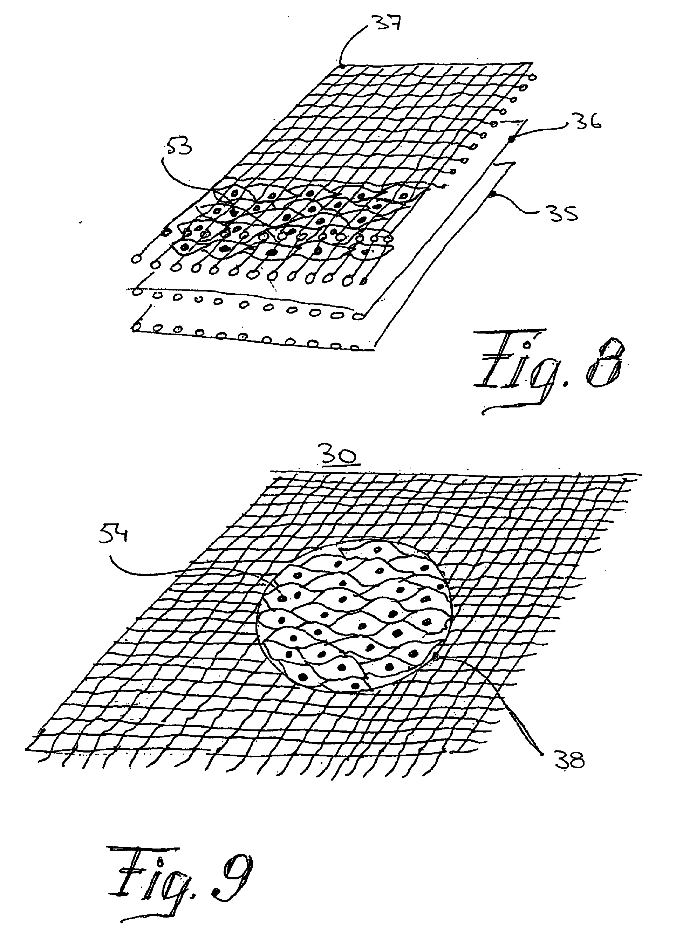

Figur 8 zeigt einen mehrschichtigen Aufbau von jeweils zweidimensional Gewebebereichen 35, 36, 37, die so beabstandet (z.B. verwebt) sind, dass sich eine oder mehrere Zellagen 53 dazwischen ansiedeln und verbreiten können (keine Ausführungsform der Erfindung). Der Vorteil solcher Anordnungen besteht in der Kommunikation verschiedener Zelltypen in verschiedenen Gewebelagen, die dennoch über Diffusion in einem molekularen Signalkontakt oder direkt über Zell-Zell-Verbindungen verbunden sein können. Die Anwendungen liegen vornehmlich bei der Bereitstellung kryokonservierter Proben für das "Tissue Engineering" und medizinischen Applikationen, z. B. in der Unfallchirurgie sowie der Implantationsmedizin.

Figur 9 zeigt ein weiteres Beispiel eines flächigen Gewebes, wie es beispielsweise bei der Gestaltung gemäß Figur 8 verwendet wird. Hier ist die Oberfläche so strukturiert oder beschichtet, dass die Zellen 54 nur in Gewebebereichen 38 anhaften können. In der Folge bleibt der Gewebeteil außerhalb des Bereiches 38 zellfrei. Derartige Strukturierungen erlauben sehr variable Kombinationsmöglichkeiten von Zellansammlungen in direktem oder indirektem Kontakt. Die Größe der Zellareale 38 kann bis auf die Einzelzellgröße miniaturisiert werden.

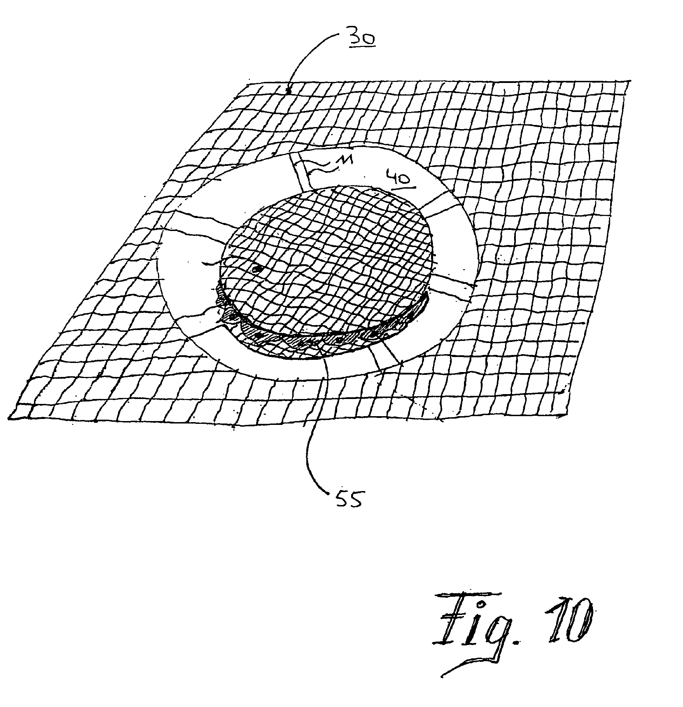

Figur 10 zeigt einen Ausschnitt aus einem Gewebe 30 mit einem Gewebekomposit 40, in dem Zellen 55 eingeschlossen sind (keine Ausführungsform der Erfindung). Das Gewebekomposit ist über wenige Verbindungen mit dem Gewebe 30 verbunden. Auf diese Weise flächig eingefrorene Zellen können vorteilhafterweise in einzelnen Studien in gefrorenem Zustand herausgebrochen, -gestanzt oder -gerissen werden. Die Gewebestruktur gemäß Figur 10 lässt sich vorteilhafterweise in Form von einzelnen Stücken bis hin zu Endlosmaterial bereitstellen.

Es kann eine Kombination von einem oder mehreren gewebeförmigen Festphasenelementen mit einem festen Substratträger vorgesehen sein. Der feste Substratträger besteht beispielsweise aus einer planaren Substratoberfläche, auf der das Festphasenelement angeordnet ist, oder aus einem mit Probenreservoiren strukturierten Körper. Die Probenreservoire bilden in dem strukturierten Körper Kompartimente, in denen mindestens ein Festphasenelement mit adhärent fixierten oder umschlossenen Proben, ggf. zusätzlich mit einer Nährlösung oder Suspension angeordnet und eingefroren werden kann.

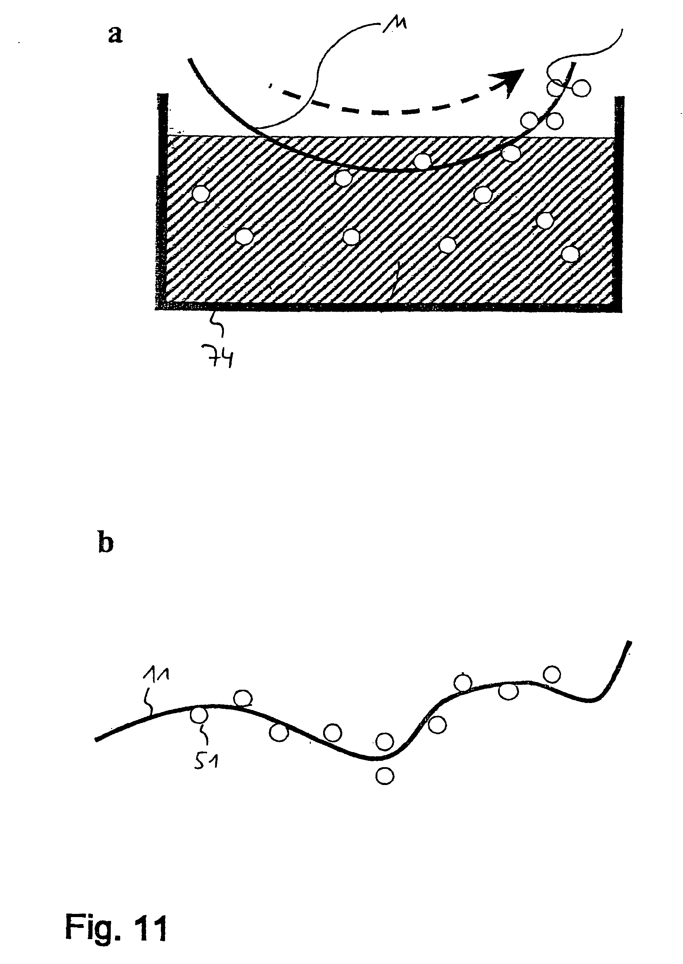

Die Figuren 11a und b illustrieren weitere Einzelheiten der Beschickung eines erfindungsgemäßen Kryosubstrates oder eines filamentartigen Probenträgers. Dabei wird das Gewebe oder Filament 11 durch ein Probenreservoir 74 (z. B. Zellsuspension) gezogen und dadurch mit der Probe beladen. Figur 11b zeigt das beladene Festphasenelement, bei dem die Probe in Form von kleinen, teilweise getrennten, Probenvolumina oder in Form direkt adhärierter Zellen am Gewebe verbleibt.

## Patentansprüche

1. Kryosubstrat, insbesondere zur Kryokonservierung biologischer Proben (50, 51, 53), mit mindestens einem Festphasenelement(10), das zur adhärenten Probenfixierung eingerichtet ist und eine Vielzahl von Trägerfilamenten (11) umfasst, die zumindest teilweise ein Gewebe (20) bilden,
**dadurch gekennzeichnet, dass**
- das Festphasenelement (10) durch einen einzelnen Trägerfilament-Strang oder Trägerfilament-Schlauch aus mehreren Trägerfilamenten gebildet wird, und
- das Festphasenelement mehrere Gewebebereiche (23, 24) umfasst, in denen die Trägerfilamente (11) jeweils verschiedene Trägerfilamentdichten und/oder verschiedene Oberflächenmodifizierungen, in denen die Adhäsion von Zellen befördert oder behindert wird, aufweisen.

2. Kryosubstrat nach Anspruch 1, bei dem die Gewebebereiche über einzelne, voneinander beabstandete Trägerfilamente (26) verbunden sind.

3. Kryosubstrat nach Anspruch 1 oder 2, bei dem das Gewebe zumindest abschnittsweise die Form eines zylinderförmigen Hohlkörpers besitzt.

4. Kryosubstrat nach mindestens einem der vorhergehenden Ansprüche, bei dem das Gewebe Löcher (27) aufweist.

5. Kryosubstrat nach Anspruch 4, bei dem die Löcher (27) so dimensioniert sind, das ihr umlaufender Rand eine Probenfixierung von einzelnen Zellen (51, 53) oder Zellgruppen ermöglicht.

6. Kryosubstrat nach mindestens einem der vorhergehenden Ansprüche, bei dem der Trägerfilament-Strang oder der Trägerfilament-Schlauch eine Trägerfilamentdichte derart aufweist, dass mittlere Abstände zwischen Trägerfilamenten (11) größer oder gleich der Dicke der Trägerfilamente (11) ist.

7. Kryosubstrat nach mindestens einem der vorhergehenden Ansprüche, bei dem die Trägerfilamente (11) entlang ihrer Länge zumindest in vorbestimmten Teilbereichen eine Modifizierung aufweisen, die die adhärente Probenfixierung fördert.

8. Kryosubstrat nach mindestens einem der vorhergehenden Ansprüche, bei dem das Festphasenelement (10) auf einer festen Substratoberfläche oder in einem Substratkompartiment angeordnet ist.

9. Kryosubstrat nach mindestens einem der vorhergehenden Ansprüche, bei dem das Festphasenelement mit Elektroden, Stimulatoren, Wirkstoffquellen, Sensoren, Identifikationseinrichtungen und/oder Einrichtungen zur Vitalitätsüberprüfung ausgestattet ist.

10. Verfahren zur Kryokonservierung biologischer Proben (50, 51, 53), bei dem die Trägerfilamente (11) eines Kryosubstrats nach einem der vorhergehenden Ansprüche mit Proben beladen und der Kryokonservierung unterzogen werden.

11. Verfahren nach Anspruch 10, bei dem Zellen (51, 53) oder Zellgruppen adhärent an den Trägerfilamenten fixiert und im Verbund mit diesem zur Kryokonservierung eingefroren werden.

12. Verfahren nach mindestens einem der Ansprüche 10 oder 11, bei dem die Beladung der Trägerfilamente (11) mit der Probe (50, 51, 53) durch Eintauchen in mindestens eine Probensuspension (74) erfolgt.

13. Verfahren nach mindestens einem der Ansprüche 10 bis 12, bei dem zur Probenentnahme Teile vom Kryosubstrat abgeschnitten werden.

## Claims

1. Cryosubstrate, in particular for cryopreservation of biological specimens (50, 51, 53), having at least one solid-phase element (10), which is designed for adherent fixation of specimens and includes a plurality of carrier filaments (10) which form at least partially a fabric (20),
**characterized in that**
- the solid-phase element (10) is formed by a single carrier filament strand or carrier filament hose made of multiple carrier filaments, and
- the solid-phase element comprises multiple fabric regions (23, 24) in which the carrier filaments (11) each have different carrier filament densities and/or different surface modifications, in which the adhesion of cells is promoted or hindered.

2. Cryosubstrate according to claim 1, wherein the fabric regions are connected by individual carrier filaments (26) spaced a distance apart mutually.

3. Cryosubstrate according to claim 1 or 2, wherein the fabric is in the form of a cylindrical hollow body in at least some sections.

4. Cryosubstrate according to at least one of the preceding claims, wherein the fabric has holes (27).

5. Cryosubstrate according to Claim 9, wherein the holes (27) are of such dimensions that their peripheral edge permits fixation of specimens of individual cells (51, 53) or cell groups.

6. Cryosubstrate according to at least one of the preceding claims, wherein the carrier filament strand or the carrier filament hose has a carrier filament density such that the average distances between carrier filaments (11) are greater than or equal to the thickness of the carrier filaments (11).

7. Cryosubstrate according to at least one of the preceding claims, wherein the carrier filaments (11) have a modification along their length in at least predetermined partial regions, said modification being such as to promote adherent fixation of specimens.

8. Cryosubstrate according to at least one of the preceding claims, wherein the solid-phase element (10) is arranged on a solid substrate surface or in a substrate compartment.

9. Cryosubstrate according to at least one of the preceding claims, wherein the solid-phase element is equipped with electrodes, stimulators, active ingredient sources, sensors, identification devices and/or devices for testing vitality.

10. Method of cryopreservation of biological specimens (50, 51, 53), wherein the carrier filaments (11) of a cryosubstrate according to one of the preceding claims is loaded with specimens and is subjected to cryopreservation.

11. Method according to claim 10, wherein cells (51, 53) or cell groups are adherently attached to the carrier filaments and are frozen in a composite with them for cryopreservation.

12. Method according to at least one of claims 10 or 11,
wherein the loading of the carrier filaments (11) with the specimen (50, 51, 53) is accomplished by immersion in at least one specimen suspension (74).

13. Method according to at least one of claims 10 through 12, wherein parts of the cryosubstrate are cut away for sampling.

## Revendications

1. Cryosubstrat, en particulier pour la cryoconservation d'échantillons biologiques (50, 51, 53), comportant au moins un élément à phase solide (10) conçu pour pouvoir fixer l'échantillon par adhérence et qui comprend une pluralité de filaments de support (11) qui forment au moins partiellement un tissu (20),
**caractérisé en ce que**
- l'élément à phase solide (10) est formé par un seul brin de filaments de support ou une seule gaine de filaments de support constitués de plusieurs filaments de support, et **en ce que**
- l'élément à phase solide comprend plusieurs zones de tissu (23, 24) où les filaments de support (11) présentent différentes densités de filaments de support et/ou différentes modifications de surface, et où l'adhérence des cellules est assistée ou empêchée.

2. Cryosubstrat selon la revendication 1, où les zones de tissu sont reliées par différents filaments de support (26) espacés les uns des autres.

3. Cryosubstrat selon la revendication 1 ou la revendication 2, où le tissu présente au moins partiellement la forme d'un corps cylindrique creux.

4. Cryosubstrat selon au moins une des revendications précédentes, où le tissu est pourvu de trous (27).

5. Cryosubstrat selon la revendication 4, où les trous (27) sont dimensionnés de telle manière que leur bord périphérique permet la fixation de différentes cellules (51, 53) ou groupes de cellules de l'échantillon.

6. Cryosubstrat selon au moins une des revendications précédentes, où le brin de filaments de support ou la gaine de filaments de support présente une densité de filaments de support telle que l'espacement moyen entre filaments de support (11) est supérieur ou égal à l'épaisseur des filaments de support (11).

7. Cryosubstrat selon au moins une des revendications précédentes, où le ou les filaments de support (11) présentent une modification sur leur longueur, au moins dans des zones partielles prédéfinies, laquelle assiste la fixation de l'échantillon par adhérence.

8. Cryosubstrat selon au moins une des revendications précédentes, où l'élément à phase solide (10) est disposé sur une surface de substrat solide ou dans un compartiment de substrat.

9. Cryosubstrat selon au moins une des revendications précédentes, où l'élément à phase solide est pourvu d'électrodes, de stimulateurs, de sources de substance active, de capteurs, de dispositifs d'identification et/ou de dispositifs de contrôle de vitalité.

10. Procédé de cryoconservation d'échantillons biologiques (50, 51, 53), où le ou les filaments de support (11) d'un cryosubstrat selon l'une des revendications précédentes sont chargés d'échantillons et soumis à cryoconservation.

11. Procédé selon la revendication 10, où des cellules (51, 53) ou groupes de cellules sont fixés par adhérence sur le ou les filaments de support et congelés en liaison avec ceux-ci pour cryoconservation.

12. Procédé selon au moins une des revendications 10 ou 11, où le chargement en échantillons (50, 51, 53) du ou des filaments de support (11) est effectué par plongée dans au moins une suspension d'échantillons (74).

13. Procédé selon au moins une des revendications 10 à 12, où des parties du cryosubstrat sont découpées pour prélèvement d'échantillons.
